# EUROPÄISCHE PATENTSCHRIFT

(11) **EP 2 771 209 B1**
(45) Veröffentlichungstag und Bekanntmachung des Hinweises auf die Patenterteilung: **12.08.2015**
(21) Anmeldenummer: 12753947.6
(22) Anmeldetag: 29.08.2012
(51) Int. Cl.: B60Q 1/44, B60T 7/04, B60T 13/66

(54) **VORRICHTUNG ZUM STEUERN EINES BREMSLICHTS IN EINEM KRAFTFAHRZEUG**
DEVICE FOR CONTROLLING A BRAKE LIGHT IN A MOTOR VEHICLE
DISPOSITIF POUR COMMANDER UN FEU STOP DANS UN VEHICULE AUTOMOBILE

(30) Priorität: 25.10.2011 DE 102011085142
(43) Veröffentlichungstag der Anmeldung: 03.09.2014
(73) Patentinhaber: Robert Bosch GmbH, 70442 Stuttgart (DE)
(72) Erfinder: KUNZ, Michael, 71711 Steinheim An Der Murr (DE); BUECKER, Martin, 74074 Heilbronn (DE); SPOERI, Tobias, 74232 Abstatt (DE)
(86) Internationale Anmeldenummer: PCT/EP2012/066716
(87) Internationale Veröffentlichungsnummer: WO 2013/060508

(56) Entgegenhaltungen:
- WO-A1-2011/091996
- DE-A1- 19 504 411
- DE-A1-102006 017 302
- US-A- 4 978 177

## Beschreibung

Die vorliegende Erfindung betrifft eine Vorrichtung zum Steuern eines Bremslichts in einem Kraftfahrzeug. Ferner betrifft die Erfindung ein mit einer solchen Vorrichtung ausgestattetes Kraftfahrzeug.

### STAND DER TECHNIK

Für eine Ansteuerung von Bremslichtern in einem Fahrzeug wird herkömmlich meist ein mechanischer Bremslichtschalter eingesetzt. Dieser Bremslichtschalter ist an einer Pedalanlage des Fahrzeugs montiert und kann die Betätigung eines Bremspedals detektieren. Der Bremslichtschalter erzeugt hierbei ein Bremspedalsignal, das lediglich wiedergibt, ob das Bremspedal betätigt wird oder nicht. Das heißt, das Bremspedalsignal kennt nur zwei Zustände: nicht betätigt (="0") und betätigt (="1"). Das Bremspedalsignal wird hierbei dazu verwendet, eine Aktivierung des Bremslichts, d.h ein Einschalten oder ein Ausschalten des Bremslichts, zu steuern.

Ergänzend nutzen einige Fahrzeughersteller das Bremspedalsignal zusätzlich für eine Sicherheitsabfrage, um in bestimmten Situationen wie zum Beispiel bei einem Motorstart oder einem Gangwechsel bei einem Automatikgetriebe, das heißt, wenn zum Beispiel ein Schalthebel aus der "P"-Position herausbewegt werden soll, sicherzustellen, dass die Bremse des Fahrzeugs betätigt ist.

In modernen Fahrzeugen, insbesondere im Bereich von Hybrid- und Elektrofahrzeugen, kommen zunehmend Bremssysteme zum Einsatz, die mit einem Leerweg in einer Betätigungseinheit realisiert sind. Dieser Leerweg kann dazu genutzt werden, um ein maximales elektrisches Bremsmoment eines elektrischen Generators zu nutzen, ohne hydraulischen Druck auf Bremszylinder in den Rädern aufgrund der Betätigung des Bremspedals durch den Fahrer aufzubauen. Dadurch kann eine erhöhte Rekuperationseffizienz, das heißt eine verbesserte Rückgewinnung von elektrischer Energie durch den Generator während des Bremsvorgangs, erreicht werden. Um einen Bremswunsch eines Fahrers innerhalb des Leerwegbereichs zu detektieren, wird ein mit dem Bremspedal gekoppelter Bremspedalsensor eingesetzt. Dieser Bremspedalsensor kann im Gegensatz zu herkömmlichen Bremslichtschaltern nicht lediglich erkennen, ob das Bremspedal überhaupt betätigt wird, sondern kann auch eine Stärke der Betätigung des Bremspedals, das heißt, z.B. einen Weg, um den das Bremspedal von dem Fahrer betätigt wurde, detektieren. Auf Basis eines Bremspedalsignals dieses Wegsensors kann mit einer elektronischen Steuereinheit (ECU - Electronic Control Unit) des Kraftfahrzeugs ein anzuforderndes Generatormoment eingestellt werden.

WO 2011/091996 A1 offenbart ein Verfahren zur Erzeugung eines Bremslichtausgangssignals in dem mehrere, eine Bremspedalbetätigung kennzeichnende Signale von mindestens zwei redundanten Sensoren bestimmt, sensorbezogen ausgewertet und einer Kontrolleinrichtung zugeführt, mittels der die redundanten Signale auf Funktionalität und/oder Plausibilität geprüft werden.

Beispielsweise in der DE 10 2008 002 348 A1 wird eine Bremseinrichtung beschrieben, die komplexe brems- und fahrdynamische Regelvorgänge unterstützt. Mit dem Einsatz von Wegsensoren an Bremspedalen wird prinzipiell die Möglichkeit eröffnet, herkömmliche Bremslichtschalter entfallen zu lassen und eine Bremslichtansteuerung über eine Softwarelösung im Bremsregelsystem zu realisieren. Allerdings wird diese Möglichkeit bei herkömmlichen Fahrzeugen bisher nicht genutzt, sondern trotzdem ein mechanischer Bremslichtschalter eingesetzt, um beispielsweise bei Ausfall des Bremsregelsystems und somit fehlender Verfügbarkeit der Softwarelösung ein Liegenbleiben des Fahrzeugs zu verhindern. Ein Liegenbleiben kann hierbei beispielsweise dadurch zustande kommen, dass ohne verfügbares Bremspedalsignal die oben beschriebene Plausibilitätsprüfung zum Beispiel bei einem Motorstart oder Gangwechsel fehlschlagen kann. Da ein solches Liegenbleiben in bestimmten Situationen, wie zum Beispiel einem unbeabsichtigten Halt auf einem Bahnübergang, fatal sein kann, muss es zuverlässig vermieden werden.

### OFFENBARUNG DER ERFINDUNG

Die hier beschriebene Erfindung kann es ermöglichen, einen mechanischen Bremslichtschalter entfallen zu lassen und dennoch in einem Fehlerfall ein Liegenbleiben des Fahrzeugs zuverlässig zu verhindern.

Es wird eine Vorrichtung zum Steuern eines Bremslichts in einem Fahrzeug sowie ein Fahrzeug mit den Merkmalen der unabhängigen Ansprüche vorgeschlagen. Vorteilhafte Ausführungsformen der Erfindung sind in den abhängigen Ansprüchen definiert.

Die vorgeschlagene Vorrichtung weist einen Bremspedalsensor, eine Hauptsteuereinrichtung und eine Reservesteuereinrichtung auf.

Der Bremspedalsensor ist dabei dazu ausgelegt, ein Bremspedalsignal auszugeben, das von einer Betätigungsstärke eines Bremspedals abhängig ist. Mit anderen Worten gibt das Bremspedalsignal eine Information darüber an, wie stark das Bremspedal von dem Fahrer gedrückt wird.

Die Hauptsteuereinrichtung ist dazu ausgelegt, das Bremspedalsignal zu konditionieren und zu überwachen und ein Bremssteuersignal zum Steuern eines Bremsvorgangs sowie ein Bremspedalbetätigungssignal zum Steuern einer Aktivierung des Bremslichts auszugeben. Mit anderen Worten ist die Hauptsteuereinrichtung dazu ausgebildet, das von dem Bremspedalsensor ausgegebene Bremspedalsignal kontinuierlich zu überwachen und daraus ein Bremssteuersignal zu generieren, anhand dessen ein Bremsvorgang für das Fahrzeug gesteuert bzw. geregelt werden kann. Der Bremsvorgang kann dabei sowohl ein von einem elektrischen Generator erzeugtes Bremsmoment als auch ein durch eine Betätigung herkömmlicher hydraulischer Bremsen an den Rädern erzeugtes Bremsmoment nutzen. Ergänzend ist die Hauptsteuereinrichtung dazu ausgelegt, ein Bremspedalbetätigungssignal auszugeben. Dieses Bremspedalbetätigungssignal entspricht im Wesentlichen einem Signal, wie es von herkömmlichen Bremslichtschaltern erzeugt wird, und kann dazu genutzt werden, Bremslichter des Fahrzeugs bei entsprechender Betätigung des Bremspedals zu aktivieren. Die Hauptsteuereinrichtung kann hierzu sowohl Hardwareais auch Softwarekomponenten umfassen. Meist wird zumindest ein Teil der Konditionierungs- und Überwachungsaufgaben durch eine Softwarelösung implementiert. Auf diese Weise kann beispielsweise eine Empfindlichkeit, mit der die Hauptsteuereinrichtung auf eine Betätigung des Bremspedals reagiert und ein Bremspedalbetätigungssignal ausgibt, durch entsprechende Programmierung der Software eingestellt werden.

Die Reservesteuereinrichtung ist dazu vorgesehen, für den Fall, dass die Hauptsteuereinrichtung ausfallen sollte, ein alternatives Bremspedalbetätigungssignal zum Steuern der Aktivierung des Bremslichts bereitzustellen. Im Gegensatz zur Hauptsteuereinrichtung ist die Reservesteuereinrichtung hierzu ausschließlich hardwareimplementiert. Das heißt, es werden ausschließlich fest verdrahtete Bauelemente verwendet, um das von dem Bremspedalsensor ausgegebene Bremspedalsignal kontinuierlich konditionieren und zu überwachen und basierend auf diesem Signal ein Bremspedalbetätigungssignal, ähnlich wie es herkömmlich von Bremslichtschaltern bereitgestellt wird, zu generieren. Die Reservesteuereinrichtung kann hierzu ein hardwareimplementiertes Konditionierungsbauelement wie beispielsweise einen Tiefpassfilter aufweisen, um zum Beispiel hochfrequentes Rauschen in dem Bremspedalsignal herauszufiltern bzw. eine Gleichrichtung vorzunehmen. Das konditionierte Bremspedalsignal kann dann mit Hilfe eines hardwareimplementierten Komparators daraufhin überwacht werden, ob das Bremspedalsignal eine hinreichend starke Betätigung des Bremspedals angibt.

Der Komparator ist eine technische Funktionseinheit, welche zwei oder mehrere Größen miteinander vergleichen kann und ein daraus resultierendes Ergebnis liefert. Im vorliegenden Fall kann der Komparator das Bremspedalbetätigungssignal basierend auf Ein- und Ausschaltschwellen für die Aktivierung des Bremslichts ausgeben. Mit anderen Worten kann der Komparator das von dem Bremspedalsensor gelieferte Bremspedalbetätigungssignal mit Werten für Ein- und Ausschaltschwellen vergleichen und für den Fall, dass diese Schwellen in die eine oder andere Richtung überschritten werden, eine Aktivierung des Bremslichts auslösen oder zurücknehmen.

Die von dem Komparator verwendeten Ein- und Ausschaltschwellen können unter Berücksichtigung von Toleranzen des Bremspedals, einer Bremspedalnullstellung, des Bremspedalsensors und/oder der Reservesteuereinrichtung festgelegt werden. Hierdurch kann berücksichtigt werden, dass jedes der Bauelemente innerhalb einer Signalkette von dem Bremspedal bis schließlich zur Aktivierung des Bremslichts mit gewissen Toleranzen behaftet sein kann. Die Toleranzen einzelner oder aller Bauelemente können bei der Auswahl der Ein- und Ausschaltschwellen mit einbezogen werden.

Der Komparator kann beispielsweise ein Analogkomparator sein. Ein solcher analoger Komparator ist typischerweise eine elektronische Schaltung, die zwei elektrische Spannungen vergleicht. Am Ausgang des Komparators steht hierbei in der Regel ein Signal zur Verfügung, welches angibt, welche der an Eingängen angelegten Spannungen höher ist. Eine der angelegten Spannungen kann dabei von dem Bremspedalsignal herrühren, die andere angelegte Spannung kann eine Ein- bzw. Ausschaltschwelle wiedergeben.

Bei Verwendung von analogen diskreten Bauteilen in der Reservesteuereinrichtung sollte jedoch die Signalkette zwischen dem Bremspedal und dem zu steuernden Bremslicht mit vorzugsweise allen vorhandenen Toleranzen berücksichtigt werden, da beispielsweise insbesondere eine Offsetkompensation einer Bremspedalnullstellung nicht stattfinden kann. Mechanische bzw. elektrische Toleranzen des Bremspedalsensors, einer Betätigungseinheit und/oder einer Logik der Reservesteuereinrichtung sollten hierbei bereits in der Entwicklungsphase bekannt sein, um eine sichere Auslegung der Ein- und Ausschaltschwellen für die Logik der Reservesteuereinrichtung festzulegen. Eine sichere Auslegung der Ein- und Ausschaltschwellen ist dabei insbesondere dann erfüllt, wenn eine aufzubringende Pedalkraft zur Aktivierung des Bremslichts von Kunden gestellten Anforderungen entspricht und andererseits sichergestellt ist, dass das Bremslicht in der Bremspedalnullstellung in allen Fällen erlischt. Das heißt, je höher die Toleranzen in der Signalkette sind, desto schwieriger ist es, die funktionalen Anforderungen zu erfüllen. Ist beispielsweise eine Einschaltschwelle zu hoch angesetzt, muss im Fehlerfall eine zu hohe Bremspedalkraft aufgebracht werden, um das Bremslicht zu aktivieren. Bei Verwendung von analogen Bauelementen für die Reservesteuereinrichtung kann somit ein erhöhter Abstimmungsaufwand mit Kunden und eventuell anderen Zulieferern erforderlich sein, um die notwendigen Informationen über Toleranzen in der Signalkette bewerten zu können.

Alternativ kann der Komparator als digitaler Komparator implementiert sein. Ein solcher digitaler Komparator ist typischerweise ein elektronischer Schaltkreis, der zwei digitale Werte bezüglich ihrer Gleichheit oder hinsichtlich einer Relation von größer oder kleiner vergleichen kann. Der Bremspedalsensor kann hierbei ein digitales Bremssignal ausgeben bzw. ein analog ausgegebenes Bremspedalsignal kann digitalisiert werden. Das digitale Bremspedalsignal kann dann mit einem Schwellenwert für das Ein- bzw. Ausschalten des Bremslichts verglichen werden.

Durch die Verwendung einer digitalen Komparatorlogik ergibt sich die Möglichkeit, eine Offsetkompensation einer Bremspedalnullstellung durchzuführen. Hierdurch können sich die Toleranzen der Signalkette signifikant verringern lassen, da zum Beispiel statische Pedal- oder Signaltoleranzen nicht berücksichtigt werden brauchen. Anforderungen hinsichtlich einzustellender Parameter, wie zum Beispiel der maximalen Pedalkraft bei Aktivierung des Bremslichts, können somit mit weniger Abstimmungsaufwand erfüllt werden.

Der Bremspedalsensor kann als Wegsensor, Drucksensor oder Kraftsensor implementiert sein. Jeder dieser Sensortypen ist in der Lage, eine Betätigung des Bremspedals quantitativ zu erfassen und ein entsprechend quantitatives Bremspedalsignal zu generieren. Das quantitative Bremspedalsignal kann dabei eine Vielzahl von Signalwerten einnehmen bzw. sich innerhalb eines kontinuierlichen Signalwertbereichs bewegen. Das quantitative Bremspedalsignal wird anschließend entweder in der Hauptsteuereinrichtung oder ersatzweise in der Reservesteuereinrichtung derart ausgewertet, dass basierend auf dem Bremspedalsignal ein Bremspedalbetätigungssignal erzeugt wird, das lediglich zwei Werte, zum Beispiel 1 oder 0 bzw. AN oder AUS, einnehmen kann. Dieses binäre Bremspedalbetätigungssignal kann dann zum Steuern der Aktivierung des Bremslichts herangezogen werden.

Die hier vorgeschlagene Vorrichtung kann derart ausgestaltet sein, dass im Fall einer ordnungsgemäß funktionierenden Hauptsteuereinrichtung ausschließlich das durch die Hauptsteuereinrichtung erzeugte Bremspedalbetätigungssignal ausgegeben wird und nur im Fall einer defekten Hauptsteuereinrichtung das durch die Reservesteuereinrichtung erzeugte Bremspedalbetätigungssignal ausgegeben und zur Steuerung der Aktivierung des Bremslichts herangezogen wird. Hierdurch kann erreicht werden, dass das Bremslicht während des ordnungsgemäßen Betriebs der Hauptsteuereinrichtung von dieser gesteuert wird und somit eine in der Hauptsteuereinrichtung implementierte Software beispielsweise Einfluss auf die Ansteuerung des Bremslichts nehmen kann. Lediglich für den Fall, dass ein Defekt bei der Hauptsteuereinrichtung erkannt wird, wird die Steuerung des Bremslichts von der Reservesteuereinrichtung übernommen, so dass für diesen Notfall sowohl das Bremslicht hinreichend zuverlässig aktiviert und deaktiviert wird als auch gegebenenfalls das von der Reservesteuereinrichtung erzeugte Bremspedalbetätigungssignal von anderen Steuereinrichtungen des Fahrzeugs genutzt werden kann, beispielsweise um ein Liegenbleiben durch ein Fehlen eines solchen Signals während des Motorstarts oder eines Gangwechsels zu verhindern. Im Normalbetrieb, d.h. bei ordnungsgemäß funktionierender Hauptsteuereinrichtung, kann die Reservesteuereinrichtung permanent überwacht und gegen das Ausgangssignal der Hauptsteuereinrichtung plausibilisiert werden, um für den Fehlerfall sicherzustellen, dass die Reservesteuereinrichtung auch ein verlässliches Ausgangssignal liefert.

Bei einem mit der hier vorgeschlagenen Bremslichtsteuervorrichtung ausgestatteten Fahrzeug kann auf einen separaten Bremslichtschalter verzichtet werden. Außerdem kann in einem Fehlerfall bei der Hauptsteuereinrichtung ein Liegenbleiben des Fahrzeugs verhindert werden. Hierdurch kann sich eine Systemverfügbarkeit auf Fahrzeugebene erhöhen. Außerdem kann durch den Entfall des Bremslichtschalters ein deutlicher Kostenvorteil für einen Fahrzeughersteller entstehen, da ein Aufwand für eine Verkabelung, eine Schnittstelle zum Bremspedal und eine Freigabe für die Komponente nicht aufgebracht werden müssen.

Durch den Einsatz einer Reservesteuereinrichtung mit einer Ersatzlogik im Bremsregelsystem eines Fahrzeugs, die nur im Fehlerfall ein Ansteuern des Bremslichts übernimmt, kann somit ein mechanischer Bremslichtschalter entfallen und trotzdem bei Ausfall des Bremsregelsystems eine Bremslichtansteuerung bzw. ein Bremspedalbetätigungssignal bereitgestellt werden. Ein Eingangssignal von dem Bremspedalsensor wird hierbei elektrisch ausgewertet und in einem parallelen Pfad zur Bremslichtansteuerung genutzt. Bei voller Systemverfügbarkeit ohne Fehlerfall hat die Reservesteuerung mit der Ersatzlogik vorzugsweise keinen Einfluss auf die Ansteuerung des Bremslichts.

Es wird angemerkt, dass hierin mögliche Merkmale und Vorteile von Ausführungsformen der Erfindung teilweise mit Bezug auf die vorgeschlagene Bremslichtsteuervorrichtung und teilweise mit Bezug auf ein Fahrzeug, das mit einer solchen Vorrichtung ausgestattet ist, bzw. mit Bezug auf ein Operationsverfahren einer solchen Vorrichtung beschrieben sind. Ein Fachmann wird erkennen, dass die Merkmale miteinander kombinierbar sind bzw. in analoger Weise übertragen werden können, um auf diese Weise zu alternativen Ausführungsformen zu gelangen.

### KURZE BESCHREIBUNG DER ZEICHNUNGEN

Nachfolgend werden Ausführungsformen der Erfindung mit Bezug auf die beigefügten Zeichnungen beschrieben, wobei weder die Beschreibung noch die Zeichnungen als die Erfindung einschränkend auszulegen sind.
Fig. 1 zeigt eine Schaltskizze einer Vorrichtung zum Steuern eines Kraftfahrzeugbremslichts gemäß einer Ausführungsform der vorliegenden Erfindung.
Fig. 2 veranschaulicht Ein- und Ausschaltschwellen einer Reservesteuereinrichtung einer erfindungsgemäßen Vorrichtung basierend auf einer Toleranzkette in einem Fahrzeugbremssystem.
Fig. 3 zeigt ein Blockschaltbild für eine Reservesteuereinrichtung einer erfindungsgemäßen Vorrichtung.

Die Figuren sind lediglich schematisch und nicht maßstabsgetreu.

### AUSFÜHRUNGSFORMEN DER ERFINDUNG

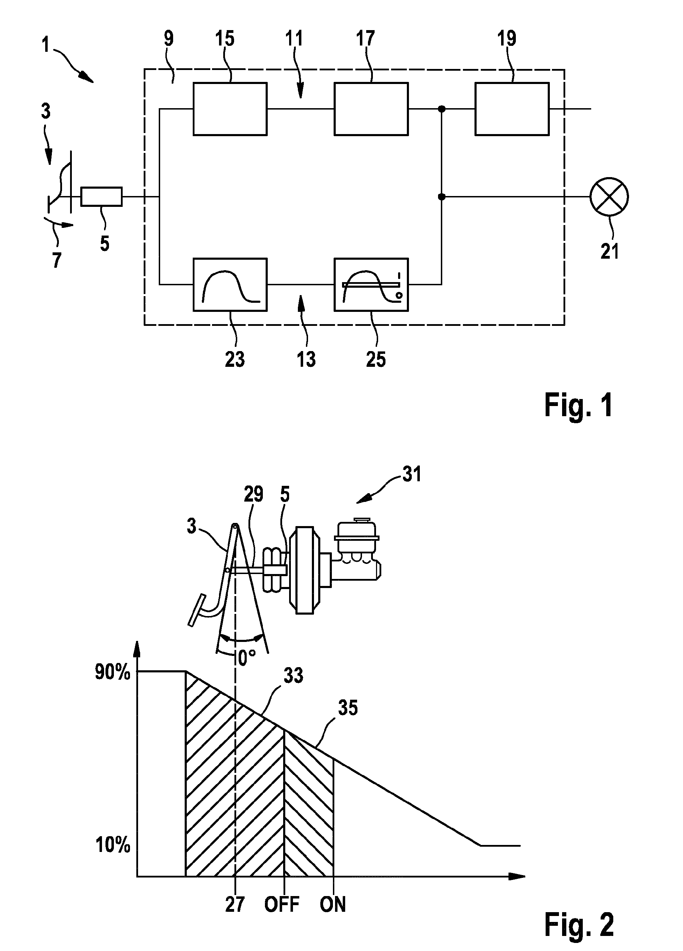

Fig. 1 zeigt schematisch ein Schaltbild einer Vorrichtung zum Steuern eines Bremslichts in einem Kraftfahrzeug gemäß einer Ausführungsform der vorliegenden Erfindung. Die Vorrichtung 1 weist einen an einem Bremspedal 3 angeordneten Bremspedalsensor 5 auf. Je nachdem wie stark das Bremspedal 3 durch Druck entlang des Pfeils 7 betätigt wird, gibt der Bremspedalsensor 5 ein von der Betätigungsstärke abhängiges quantitatives Bremspedalsignal aus und leitet dies an eine elektronische Steuereinheit (ECU) 9. Dort wird das Bremspedalsignal sowohl an eine Hauptsteuereinrichtung 11 als auch an eine Reservesteuereinrichtung 13 geleitet.

Die Hauptsteuereinrichtung 11 dient beispielsweise in einem Elektro- oder Hybridkraftfahrzeug dazu, eine Betätigungsstärke des Bremspedals 3 zu detektieren und gemäß dem der Bremspedalbetätigung entsprechenden Bremswunsch des Fahrers einen Bremsvorgang zu steuern bzw. zu regeln. Hierzu weist die Hauptsteuereinrichtung 11 eine Hardwareschaltung 15 sowie eine Software 17 auf, mit Hilfe derer das Bremspedalsignal ständig überwacht und konditioniert wird und ein Bremssteuersignal hin zu einer Bremssteuerung 19 ausgegeben wird. Anhand dieses Bremssteuersignals kann die Bremsteuerung 19 sowohl eine Bremswirkung durch einen elektrischen Generator wie auch eine Bremswirkung durch herkömmliche hydraulische Radbremsen steuern. Die Hauptsteuereinrichtung 9 erzeugt mit ihrer Hardware 15 und Software 17 ferner ein Bremspedalbetätigungssignal, mit Hilfe dessen eine Aktivierung eines Bremslichts 21 gesteuert wird.

Die Reservesteuereinrichtung 13 weist zwei Hardwarekomponenten auf. Eine erste Hardwarekomponente 23 dient dazu, das von dem Bremspedalsensor 5 gelieferte Bremspedalsignal zu konditionieren. Das konditionierte Bremspedalsignal wird dann an einen hardwareimplementierten Komparator 25 weitergeleitet. Dieser Komparator 25 vergleicht das Bremspedalsignal mit Schwellenwerten und gibt darauf basierend ein Bremspedalbetätigungssignal zum Steuern einer Aktivierung des Bremslichts 21 aus.

Fig. 2 veranschaulicht Aspekte bei der Einstellung von Ein- und Ausschaltschwellenwerten für die Aktivierung des Bremslichts mit Hilfe der vorgeschlagenen Steuervorrichtung. Insbesondere wenn es sich bei dem in der Reservesteuereinrichtung vorgesehenen Komparator um einen analogen Komparator handelt, muss eine Vielzahl von Toleranzen bei Systemkomponenten berücksichtigt werden, um die Ein- und Ausschaltschwellen zuverlässig spezifizieren zu können. Beispielsweise ist es notwendig, die Geometrie des Bremspedals 3 einschließlich aller Pedaltoleranzen zu kennen. Auch die Eigenschaften einer Betätigungskonstruktion 29 einschließlich aller Toleranzen sollte berücksichtigt werden. Ferner sollten die Verstärkungseigenschaften (z.B. Hub in Abhängigkeit von Druck) des Bremskraftverstärkers 31 bekannt sein. Alle Toleranzen sollten über die Lebensdauer der Bauteile und über den gesamten Einsatztemperaturbereich berücksichtigt werden.

Bei einer analogen Logik in der Reservesteuereinrichtung steht keine Offsetkompensation zur Verfügung. Daher müssen alle Offsettoleranzen 33 sowie die Toleranzen 35 bzw. eine Hysterese der elektronischen Steuereinheiten 9 berücksichtigt werden, um zu gewährleisten, dass die Kraft auf das Bremspedal 3, um das Bremslicht zu aktivieren, nicht zu hoch ist und andererseits eine Deaktivierung des Bremslichts stets möglich ist. Bei Verwendung eines digitalen Komparators kann eine Offsetkompensation einer Bremspedalnullstellung 27 implementiert werden.

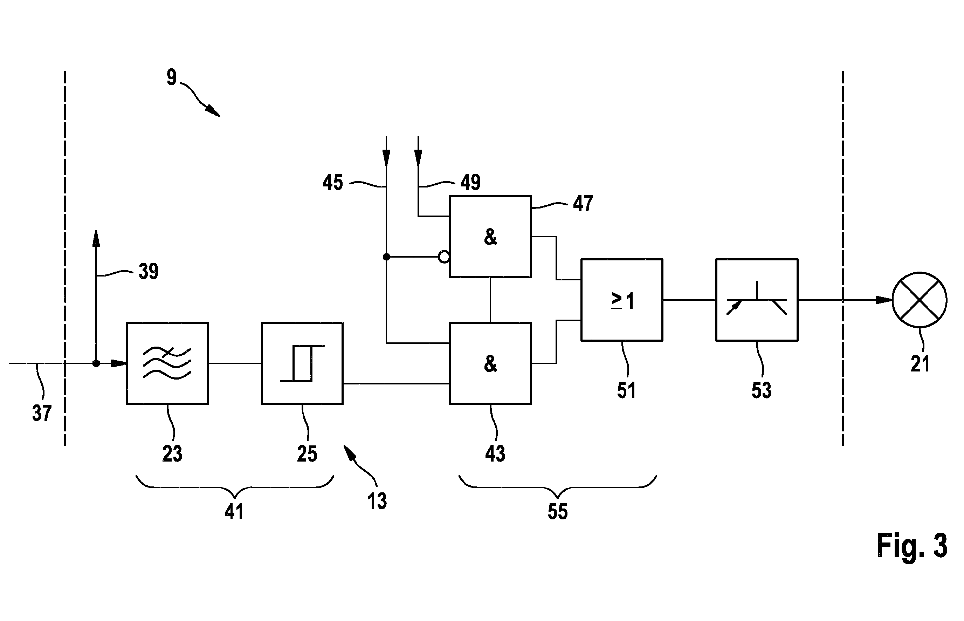

Fig. 3 zeigt eine beispielhafte Übersicht von Hardwarekomponenten einer Reservesteuereinrichtung 13 auf Blockschaltbildebene. Das Bremspedalsignal wird über eine Leitung 37 in die elektronische Steuereinheit 9 eingekoppelt. Über eine Leitung 39 kann dieses Bremspedalsignal auch der Software-Signalkonditionierung der Hauptsteuereinrichtung 11 (in Fig. 3 nicht gezeigt) zur Verfügung gestellt werden. Innerhalb der Reservesteuereinrichtung 13 durchläuft das Bremspedalsignal zunächst eine erste Hardwarekomponente 23 in Form eines Tiefpassfilters, bevor es dann in einem Komparator 25 mit Hysterese mit vorgegebenen Ein- und Ausschaltschwellenwerten verglichen wird. Der Tiefpassfilter 23 und der Komparator 25 sind Teil eines Hardware-Konditionierungspfades 41.

Das Ergebnis des Komparators 25 wird an ein Und-Gatter 43 weitergeleitet. An einem zweiten Eingang des Und-Gatters 43 wird ein Signal 45 angelegt, das angibt, ob in der Hauptsteuereinrichtung ein Fehler erkannt wurde oder nicht. An einem zweiten Und-Gatter 47 liegt an einem ersten Eingang 49 ein Bremspedalbetätigungssignal, das von der Hauptsteuereinrichtung bzw. der darin vorgesehenen Software erzeugt wurde, an. An einem zweiten Eingang liegt eine Negation des Fehlersignals 45 an.

Die Ergebnisse der beiden Und-Gatter 43, 47 werden anschließend in einer weiteren Bauteilkomponente 51 dahingehend überwacht, ob zumindest an einem der Und-Gatter 43, 47 eine logische "1" auftritt. Eine solche logische "1" gibt dann ein Bremspedalbetätigungssignal an, das über eine strombegrenzte Laststufe 53 dann die Aktivierung eines Bremslichts 21 steuert. Die Gesamtheit 55 der Komponenten 43, 47, 51, 53 dient somit dazu, die entsprechende Zuweisung des Bremspedalbetätigungssignals auf die Laststufe 53 sicherzustellen. Im Normalfall soll das Betätigungssignal von der Hauptsteuereinrichtung weitergeleitet werden und im Fehlerfall der Hauptsteuereinrichtung das Signal der Reservesteuereinrichtung. Somit kann auch ohne die Verwendung eines Bremslichtschalters zuverlässig ein Bremsbetätigungssignal ausgegeben werden.

## Patentansprüche

1. Vorrichtung (1) zum Steuern eines Bremslichts (21) in einem Kraftfahrzeug, aufweisend:
einen Bremspedalsensor (5),
eine Hauptsteuereinrichtung (11), und
eine Reservesteuereinrichtung (13),
wobei der Bremspedalsensor (5) dazu ausgelegt ist, ein von einer Betätigungsstärke eines Bremspedals (3) abhängiges Bremspedalsignal auszugeben,
wobei die Hauptsteuereinrichtung (11) dazu ausgelegt ist, das Bremssignal zu konditionieren und zu überwachen und ein Bremssteuersignal zum Steuern eines Bremsvorgangs sowie ein Bremspedalbetätigungssignal zum Steuern einer Aktivierung des Bremslichts (21) auszugeben, und
**dadurch gekennzeichnet, dass**
die Reservesteuereinrichtung (13) dazu ausgelegt ist, das Bremspedalsignal ausschließlich hardwareimplementiert zu konditionieren und basierend auf dem konditionierten Bremspedalsignal mit einem hardwareimplementierten Komparator (25) ein Bremspedalbetätigungssignal zum Steuern einer Aktivierung des Bremslichts (21) auszugeben.

2. Vorrichtung nach Anspruch 1, wobei der Komparator (25) das Bremspedalbetätigungssignal basierend auf Ein- und Ausschaltschwellenwerten für die Aktivierung des Bremslichts (21) ausgibt.

3. Vorrichtung nach Anspruch 1, wobei der Komparator (25) die Ein- und Ausschaltschwellenwerte unter Berücksichtigung von Toleranzen (33, 35) des Bremspedals (3), einer Bremspedalnullstellung (27), des Bremspedalsensors (5) und/oder der Reservesteuereinrichtung (13) festlegt.

4. Vorrichtung nach einem der Ansprüche 1 bis 3, wobei der hardwareimplementierte Komparator (25) ein analoger Komparator ist.

5. Vorrichtung nach einem der Ansprüche 1 bis 3, wobei der hardwareimplementierte Komparator (25) ein digitaler Komparator ist.

6. Vorrichtung nach Anspruch 5, wobei der digitale Komparator (25) dazu ausgelegt ist, eine Offsetkompensation einer Bremspedalnullstellung (27) durchzuführen.

7. Vorrichtung nach einem der Ansprüche 1 bis 6, wobei der Bremspedalsensor (5) mit einem Wegsensor, einem Drucksensor oder einem Kraftsensor, die jeweils eine Betätigung des Bremspedals (3) quantitativ erfassen und ein entsprechend quantitatives Bremspedalsignal generieren, implementiert ist.

8. Vorrichtung nach einem der Ansprüche 1 bis 7, wobei die Vorrichtung (1) dazu ausgelegt ist, im Fall einer ordnungsgemäß funktierenden Hauptsteuereinrichtung (11) ausschließlich das durch die Hauptsteuereinrichtung (11) erzeugte Bremspedalbetätigungssignal auszugeben und im Fall einer defekten Hauptsteuereinrichtung (11) das durch die Reservesteuereinrichtung (13) erzeugte Bremspedalbetätigungssignal auszugeben.

9. Kraftfahrzeug mit einer Vorrichtung (1) zum Steuern eines Bremslichts (21) gemäß einem der Ansprüche 1 bis 8.

10. Kraftfahrzeug nach Anspruch 9, wobei an einem Bremspedal (3) kein separater Bremslichtschalter vorgesehen ist.

## Claims

1. Device (1) for controlling a brake light (21) in a motor vehicle, having:
a brake pedal sensor (5),
a main control device (11), and
a back-up control device (13),
the brake pedal sensor (5) being designed to output a brake pedal signal dependent on an actuation intensity of a brake pedal (3),
the main control device (11) being designed to condition and monitor the brake signal and to output a brake control signal for controlling a braking operation and a brake pedal actuation signal for controlling activation of the brake light (21),
**characterized in that** the back-up control device (13) is designed to condition the brake pedal signal only in a hardware-implemented manner and to output a brake pedal actuation signal for controlling activation of the brake light (21) on the basis of the conditioned brake pedal signal using a hardware-implemented comparator (25).

2. Device according to Claim 1, the comparator (25) outputting the brake pedal actuation signal on the basis of switch-on and switch-off threshold values for the activation of the brake light (21).

3. Device according to Claim 1, the comparator (25) stipulating the switch-on and switch-off threshold values taking into account tolerances (33, 35) of the brake pedal (3), of a brake pedal zero position (27), of the brake pedal sensor (5) and/or of the back-up control device (13).

4. Device according to one of Claims 1 to 3, the hardware-implemented comparator (25) being an analogue comparator.

5. Device according to one of Claims 1 to 3, the hardware-implemented comparator (25) being a digital comparator.

6. Device according to Claim 5, the digital comparator (25) being designed to carry out offset compensation of a brake pedal zero position (27).

7. Device according to one of Claims 1 to 6, the brake pedal sensor (5) being implemented with a travel sensor, a pressure sensor or a force sensor, each of which quantitatively records actuation of the brake pedal (3) and generates an accordingly quantitative brake pedal signal.

8. Device according to one of Claims 1 to 7, the device (1) being designed, in the case of a properly functioning main control device (11), to output only the brake pedal actuation signal generated by the main control device (11) and, in the case of a defective main control device (11), to output the brake pedal actuation signal generated by the back-up control device (13).

9. Motor vehicle having a device (1) for controlling a brake light (21) according to one of Claims 1 to 8.

10. Motor vehicle according to Claim 9, no separate brake light switch being provided on a brake pedal (3).

## Revendications

1. Système (1) de commande d'un feu stop (21) dans un véhicule automobile, comprenant :
un détecteur de pédale de frein (5),
un dispositif de commande principal (11), et
un dispositif de commande de réserve (13),
le détecteur de pédale de frein (5) étant conçu pour délivrer un signal de pédale de frein dépendant d'une force d'actionnement d'une pédale de frein (3),
le dispositif de commande principal (11) étant conçu pour conditionner et surveiller le signal de freinage et pour délivrer un signal de commande de frein destiné à commander une opération de freinage ainsi qu'un signal d'actionnement de pédale de frein destiné à commander une activation du feu stop (21), et
**caractérisé en ce que** le dispositif de commande de réserve (13) est conçu pour conditionner le signal de pédale de frein exclusivement par une réalisation matérielle et, en se basant sur le signal de pédale de frein conditionné, délivrer un signal d'actionnement de pédale de frein destiné à commander une activation du feu stop (21) avec un comparateur réalisé matériellement (25).

2. Système selon la revendication 1, avec lequel le comparateur (25) délivre le signal d'actionnement de pédale de frein en vue de l'activation du feu stop (21) en se basant sur des valeurs de seuil de mise en circuit et de mise hors circuit.

3. Système selon la revendication 1, avec lequel le comparateur (25) définit les valeurs de seuil de mise en circuit et de mise hors circuit en tenant compte des tolérances (33, 35) de la pédale de frein (3), d'une position neutre de la pédale de frein (27), du détecteur de pédale de frein (5) et/ou du dispositif de commande de réserve (13).

4. Système selon l'une des revendications 1 à 3, avec lequel le comparateur réalisé matériellement (25) est un comparateur analogique.

5. Système selon l'une des revendications 1 à 3, avec lequel le comparateur réalisé matériellement (25) est un comparateur numérique.

6. Système selon la revendication 5, avec lequel le comparateur numérique (25) est conçu pour effectuer une compensation du décalage d'une position neutre de la pédale de frein (27).

7. Système selon l'une des revendications 1 à 6, avec lequel le détecteur de pédale de frein (5) est réalisé avec un détecteur de course, un détecteur de pression ou un détecteur de force, lesquels effectuent respectivement une détection quantitative d'un actionnement de la pédale de frein (3) et génèrent un signal de pédale de frein quantitatif correspondant.

8. Système selon l'une des revendications 1 à 7, avec lequel le système (1) est conçu pour, dans le cas d'un dispositif de commande principal (11) qui fonctionne en toute conformité, délivrer exclusivement le signal d'actionnement de pédale de frein généré par le dispositif de commande principal (11) et, dans le cas d'un dispositif de commande principal (11) défectueux, délivrer le signal d'actionnement de pédale de frein généré par le dispositif de commande de réserve (13).

9. Véhicule automobile équipé d'un système (1) de commande d'un feu stop (21) selon l'une des revendications 1 à 8.

10. Véhicule automobile selon la revendication 9, avec lequel aucun commutateur de feu stop séparé n'est prévu sur une pédale de frein (3).
